# EUROPEAN PATENT APPLICATION

(11) **EP 4 850 847 A1**
(43) Date of publication of application: **09.12.2026**
(21) Application number: 24925617.3
(22) Date of filing: 06.12.2024
(51) Int. Cl.: B23K 26/342, B23K 26/70, B23K 26/00

(54) **BATTERY REPAIR WELDING METHOD, BATTERY REPAIR WELDING SYSTEM, AND BATTERY PRODUCTION LINE**

(30) Priority: 19.02.2024 CN 202410184191
(71) Applicant: Contemporary Amperex Technology Co., Limited, Ningde, Fujian 352100 (CN)
(72) Inventor: YIN, Zeyuan, Ningde, Fujian 352100 (CN); CHEN, Jianyun, Ningde, Fujian 352100 (CN); PENG, Chunyang, Ningde, Fujian 352100 (CN)
(74) Representative: Straus, Alexander
(86) International application number: PCT/CN2024/137391
(87) International publication number: WO 2025/175879

(57) **Abstract**

A battery repair welding method. A battery housing comprises a housing body and a top cover, wherein the housing body comprises a bottom wall and a side wall circumferentially arranged around the bottom wall, the bottom wall and the side wall enclosing to form an accommodating cavity for accommodating a battery cell; and the top cover covers the upper end of the side wall and is welded to the side wall, and a weld seam located on the side surface of the battery housing is formed at the joint between the top cover and the outer wall surface of the side wall. The method comprises the following steps: obtaining the length of a milling groove of the battery housing and obtaining, on the basis of the length of the milling groove, a target length of a weld wire to be welded; providing said weld wire on the basis of the target length; and controlling a welding head to repair-weld the milling groove by using said weld wire from a side of the side surface of the battery housing. When there is a defect in the weld seam of a battery, the defective area is milled to create a milling groove and the milling groove is then repair-welded, and the provided weld wire matches the dimensions of the milling groove, thereby improving the repair welding efficiency, ensuring the integrity of the weld seam of a finished battery product, and increasing the yield rate of battery production. Further disclosed are a battery repair welding system and a battery production line.

## Description

### CROSS-REFERENCE TO RELATED APPLICATIONS

This application claims priority to Chinese Patent Application No. 202410184191.5, filed on February 19, 2024, which is incorporated herein by reference in its entirety.

### TECHNICAL FIELD

The present application relates to the field of batteries, and in particular, to a battery repair welding method, a battery repair welding system, and a battery production line.

### BACKGROUND

Power batteries have become green batteries with the best comprehensive performance in the world today due to their characteristics such as high voltage, high capacity, low consumption, no memory effect, no pollution, small volume, low internal resistance, low self-discharge, and a large number of cycles.

During the production process of power batteries, it is usually necessary to weld a housing and a top cover of the power battery together. However, during the welding process, welding defects may occur at a weld seam, and such defects may affect the yield rate of the batteries, thereby bringing much inconvenience to battery production.

### SUMMARY

In view of the above problems, the present application provides a battery repair welding method, a battery repair welding system, and a battery production line, so as to increase the yield rate in battery production.

According to a first aspect of the present application, a battery repair welding method is provided. A battery housing includes a housing body and a top cover. The housing body includes a bottom wall and side walls arranged around the bottom wall in a circumferential direction. The bottom wall and the side walls enclose an accommodating cavity for accommodating an electrode assembly. The top cover covers an upper end of the side walls and is welded to the side walls. A weld seam located on a side surface of the battery housing is formed at a junction between the top cover and an outer wall surface of the side walls. The battery housing has milling grooves distributed on the weld seam. The battery repair welding method includes the following steps:
obtaining a length of a milling groove of a battery housing, and obtaining a target length of a welding wire to be welded according to the length of the milling groove;
providing the welding wire to be welded according to the target length; and
controlling a welding head to perform repair welding on the milling groove using the welding wire to be welded from a position beside a side surface of the battery housing.

Through this method, when a defect occurs in the weld seam of the battery, the defect portion is milled to form a milling groove, and the milling groove is subjected to repair welding. Moreover, the provided welding wire matches the size of the milling groove, thereby improving repair welding efficiency, ensuring integrity of the weld seam of a finished battery, improving reliability of the finished battery, and increasing a yield rate of battery production.

In some embodiments, the battery repair welding method further includes: pressing and covering terminals on the top cover using a cover member during the repair welding process. The terminals are protected by the cover member, preventing a heat source emitted from the welding head from directly acting on the terminals and causing damage to the terminals, thereby improving repair welding quality.

In some embodiments, the obtaining a length of the milling groove of the battery housing includes: obtaining an image of the weld seam of the battery housing; and obtaining the length of the milling groove based on the image of the weld seam.

In some embodiments, the battery repair welding method further includes: outputting a first welding wire and detecting an actual length of the first welding wire; and performing repair welding on the milling groove using the first welding wire when a difference between the actual length of the first welding wire and the target length is within a preset range. The image of the weld seam is identified to accurately obtain the length of the milling groove, thereby improving reliability of repair welding.

In some embodiments, the battery repair welding method further includes: cutting off the first welding wire when the difference between the actual length of the first welding wire and the target length is not within the preset range; outputting a second welding wire and detecting an actual length of the second welding wire, until a difference between an actual length of a newly output welding wire and the target length is within the preset range; and performing repair welding on the milling groove using the newly output welding wire. By detecting the actual length of the welding wire to be welded, the possibility that the actual length fails to meet the expected length is reduced, thereby improving reliability and ensuring repair welding efficiency.

In some embodiments, the battery repair welding method further includes: outputting a first welding wire and detecting whether an extending direction of the first welding wire is consistent with a length direction of the milling groove; and performing repair welding on the milling groove using the first welding wire when the extending direction of the first welding wire is consistent with the length direction of the milling groove. On the basis of the actual length of the welding wire meeting the requirements, it is further necessary to ensure that the extending direction of the welding wire is consistent with the length direction of the milling groove, thereby improving repair welding quality.

In some embodiments, the battery repair welding method further includes: cutting off the first welding wire when the extending direction of the first welding wire is inconsistent with the length direction of the milling groove; outputting a second welding wire and detecting an extending direction of the second welding wire, until an extending direction of a newly output welding wire is consistent with the length direction of the milling groove, and performing repair welding on the milling groove using the newly output welding wire. In this way, during the actual repair welding process, it can be ensured that the extending direction of the welding wire meets the requirements, thereby improving repair welding quality.

In some embodiments, the battery repair welding method includes: obtaining lengths of at least two milling grooves of the battery housing; and obtaining target lengths of at least two welding wires to be welded according to the lengths of the at least two milling grooves. In this way, the at least two milling grooves can be continuously subjected to repair welding, thereby improving repair welding efficiency.

In some embodiments, the battery repair welding method includes: sequentially providing at least two welding wires to be welded according to the target lengths of the at least two welding wires to be welded; and sequentially performing repair welding on the at least two milling grooves using the at least two welding wires to be welded. In this way, when repair welding is continuously performed on a plurality of milling grooves, each provided welding wire can match a corresponding milling groove, thereby ensuring repair welding quality and efficiency.

In some embodiments, the sequentially providing at least two welding wires to be welded according to the target lengths of the at least two welding wires to be welded and sequentially performing repair welding on the at least two milling grooves using the at least two welding wires to be welded includes: obtaining distribution positions of the at least two milling grooves on the battery housing; obtaining a repair welding sequence according to the distribution positions; and adjusting an orientation of the battery according to the repair welding sequence to sequentially perform repair welding on each of the milling grooves. During the repair welding process, the orientation of the battery is adjusted, such that the milling grooves at different positions can each correspond to the laser emission head, thereby ensuring that each milling groove can be subjected to repair welding, improving repair welding efficiency, and ensuring integrity of a finished battery.

In some embodiments, the at least two milling grooves include a first milling groove and a second milling groove distributed on different side surfaces of the battery housing. The battery repair welding method further includes: performing repair welding on the first milling groove and, during the repair welding process, pressing and covering terminals using a cover member on the top cover; after completion of the repair welding on the first milling groove, separating the cover member from the top cover and controlling the battery housing and the cover member to rotate by the same angle; and controlling the cover member to press and cover terminals on the top cover again and performing repair welding on the second milling groove. In this way, control is facilitated, thereby improving the control accuracy of the rotation angles of the battery housing and the cover member.

According to a second aspect of the present application, a battery repair welding system is provided for performing repair welding on a battery housing. The battery housing includes a housing body and a top cover. The housing body includes a bottom wall and side walls arranged around the bottom wall in a circumferential direction. The bottom wall and the side walls enclose an accommodating cavity for accommodating an electrode assembly. The top cover covers the upper end of the side walls and is welded to the side walls. A weld seam located on a side surface of the battery housing is formed at a junction between the top cover and an outer wall surface of the side walls. The battery housing has milling grooves distributed on the weld seam. The battery repair welding system includes a repair welding assembly, a clamping assembly, a wire feeding assembly, and a controller. The repair welding assembly is disposed beside a welding station and includes a welding head. The welding head is located beside the side surface of the battery housing and is configured to perform repair welding on the milling groove on the battery housing of an incoming battery. The clamping assembly is disposed beside the welding station and is configured to clamp the incoming battery and drive the incoming battery to move to the welding station. The wire feeding assembly is disposed beside the welding station and is configured to provide a welding wire for the repair welding assembly to perform welding. The controller is configured to obtain a length of the milling groove, obtain a target length of a welding wire to be welded according to the length of the milling groove, and control the wire feeding assembly to provide the welding wire to be welded according to the target length.

Through the battery repair welding system, steps such as loading battery, detecting the length of the milling groove, providing a welding wire of a corresponding size, and performing repair welding are completed in an automated manner, thereby reducing manual intervention, improving repair welding efficiency, and reducing a scrap rate of batteries.

In some embodiments, a pressing assembly is further included. The pressing assembly includes a cover member. When the clamping assembly drives the incoming battery to move to the welding station, the cover member moves relative to the battery housing in a height direction to cover and press terminals on the top cover. The terminals are protected using the cover member, thereby improving reliability of the battery repair welding system.

In some embodiments, the clamping assembly is rotatably disposed about its own axis to drive the incoming battery to rotate, so as to perform repair welding on milling grooves on different side surfaces of the battery housing. The pressing assembly is rotatably disposed about its own axis, such that after the clamping assembly drives the incoming battery to rotate, the pressing assembly rotates about its own axis by the same angle to cover and press the terminals. In this way, when repair welding is performed on the milling groove on each side surface of the battery housing, protection of the terminals by the cover member may be achieved, thereby improving reliability of the battery repair welding system.

In some embodiments, a vision camera is further included. The vision camera is communicatively connected to the controller and is configured to obtain an image of the weld seam of the battery housing. The controller is configured to obtain the length of the milling groove according to the image of the weld seam. Through the vision camera and machine vision technology, image information of the milling groove can be obtained relatively accurately, and the length of the milling groove can be further obtained, thereby improving accuracy and work efficiency.

In some embodiments, the repair welding assembly includes a laser emission head. The laser emission head is configured to emit laser light for welding. The controller is configured to obtain a distribution position of the milling groove on the battery housing according to the image of the weld seam, and control the laser emission head and the welding wire to be welded to correspond to the position of the milling groove according to the distribution position. Laser welding technology is adopted to improve repair welding efficiency. Moreover, after the clamping assembly delivers the incoming battery to the welding station, the laser emission head and the wire feeding assembly are controlled to move to the position of the milling groove based on the position of the milling groove obtained by machine vision, without further adjusting the position of the incoming battery, thereby improving processing efficiency.

In some embodiments, the wire feeding assembly includes a wire outlet device. The wire outlet device is configured to provide the welding wire to be welded according to the target length, and the wire outlet device is movably disposed to move toward or away from the welding station. The wire outlet device is movable in a first direction, thereby facilitating alignment of the welding wire with the position of the milling groove and improving repair welding efficiency.

In some embodiments, the wire outlet device includes a wire outlet driver and a wire outlet head. The wire outlet driver is configured to provide the welding wire to be welded to the wire outlet head. In this way, the length of the welding wire at the wire outlet head can be controlled relatively accurately, such that the length of the welding wire matches the length of the milling groove, reducing time waste caused by replacing the welding wire due to the length of the welding wire failing to meet expectations, and thereby improving repair welding efficiency.

In some embodiments, the wire feeding assembly further includes a detection device. The detection device is configured to detect an actual length of the welding wire to be welded, and when a difference between the target length and the actual length is within a preset range, the controller controls the wire outlet device to move to the welding station for repair welding. The detection device can accurately detect the actual length of the welding wire at the wire outlet head, reducing a series of problems caused by an excessively large difference between the actual length of the welding wire and the target length, and improving repair welding efficiency.

In some embodiments, the wire feeding assembly further includes a cutting device spaced apart from the wire outlet device. The cutting device is configured to cut the welding wire provided by the wire outlet device. The wire outlet device and the cutting device are both communicatively connected to the controller. The controller is configured to control the wire outlet device and the cutting device to operate, such that a difference between the actual length of the welding wire and the target length is within a preset range. This improves the automation level of the battery repair welding system. Even if the output welding wire fails to meet the requirements, a new section of welding wire can be provided in a timely manner, thereby improving work efficiency.

In some embodiments, the detection device is further configured to detect whether an extending direction of the welding wire to be welded is consistent with a length direction of the milling groove. In this way, repair welding quality can be ensured, and reliability of a finished battery can be improved.

In some embodiments, the wire feeding assembly further includes a cutting device spaced apart from the wire outlet device. The cutting device is configured to cut the welding wire provided by the wire outlet device. The wire outlet device and the cutting device are both communicatively connected to the controller. The controller is configured to control the wire outlet device and the cutting device to operate, such that the extending direction of the welding wire is consistent with the length direction of the milling groove. When an offset of the welding wire fails to meet the requirements, the output welding wire is cut off, a new section of welding wire is output, and the offset thereof is continuously detected until the requirements are met before repair welding is performed, thereby ensuring repair welding quality.

In some embodiments, the controller is configured to obtain lengths of at least two milling grooves of the battery housing, obtain target lengths of at least two welding wires to be welded according to the lengths of the at least two milling grooves, sequentially provide the at least two welding wires to be welded according to the target lengths of the at least two welding wires to be welded, and sequentially perform repair welding on the at least two milling grooves using the at least two welding wires to be welded. The milling grooves can be subjected to repair welding respectively, thereby improving processing efficiency and continuously completing repair welding operations on a plurality of milling grooves on a single battery housing.

In some embodiments, the clamping assembly includes a clamp and a moving mechanism. The clamp is configured to clamp the incoming battery. The clamp is connected to the moving mechanism. The moving mechanism is configured to drive the clamp to move so as to move the incoming battery to the welding station. The clamping of the incoming battery and the transfer of the incoming battery are achieved simply and efficiently, thereby improving repair welding efficiency. Moreover, the second direction is perpendicular to the first direction, thereby optimizing spatial layout of various components in the battery repair welding system, making the spatial layout relatively compact, and saving space.

In some embodiments, the clamping assembly further includes a lifting mechanism. The lifting mechanism is disposed on the moving mechanism. The moving mechanism is configured to drive the clamp and the lifting mechanism to move. The lifting mechanism is configured to lift the incoming battery in a height direction. The lifting mechanism adjusts a distance in the height direction between an upper end surface of the incoming battery and the laser emission head, thereby improving repair welding quality.

According to a third aspect of the present application, a battery production line is provided, including a battery milling equipment and the battery repair welding system as described above. The battery milling equipment is configured to mill a welding defect on the weld seam of the battery housing to form the milling groove.

The above description is merely an overview of the technical solution of the present application. For a better understanding of the technical means in the present application such that the present application can be implemented according to the content of the specification, and to make the above and other objectives, features, and advantages of the present application more obvious and easier to understand, the following describes specific embodiments of the present application.

### BRIEF DESCRIPTION OF DRAWINGS

To describe technical solutions in embodiments of the present application more clearly, the following briefly describes the accompanying drawings required for describing the embodiments of the present application. Apparently, the accompanying drawings in the following description show merely some embodiments of the present application, and persons of ordinary skill in the art may still derive other drawings from the accompanying drawings without creative efforts.
FIG. 1 is a schematic diagram of a battery repair welding system according to some embodiments of the present application;
FIG. 2 is a schematic diagram of a repair welding assembly and a wire feeding assembly in FIG. 1;
FIG. 3 is a schematic diagram of a clamping assembly and a pressing assembly in the figure; and
FIG. 4 is a schematic diagram of a battery repair welding method according to some embodiments of the present application.

Reference numerals in specific embodiments are as follows:
repair welding assembly 1, clamping assembly 2, wire feeding assembly 3, pressing assembly 4, frame 5, moving module 6, base 7, waste bin 8, vision camera 9, controller 10;
laser emission head 11, dust hood 12, clamp 21, moving mechanism 22, rotary platform 23, wire outlet device 31, detection device 32, cutting device 33, mounting rack 34, cover member 41, gantry 42, pressing cylinder 43, rotary motor 44;
wire outlet driver 311, wire outlet head 312;
first wire outlet driver 311a, and second wire outlet driver 311b.

### DESCRIPTION OF EMBODIMENTS

Unless otherwise defined, all technical and scientific terms used herein have the same meaning as commonly understood by those of ordinary skill in the art of the present application. The terms used herein are only for the purpose of describing specific embodiments and are not intended to limit the present application. The terms "include", "comprise", and "have" and any variations thereof in the specification, claims, and the above brief description of drawings of the present application are intended to cover non-exclusive inclusion.

In the description of the embodiments of the present application, technical terms such as "first" and "second" are only used to distinguish different objects, and cannot be understood as indicating or implying relative importance or implicitly specifying the number, particular order, or primary-secondary relationship of the indicated technical features. In the description of the embodiments of the present application, the meaning of "a plurality of" is two or more, unless otherwise explicitly and specifically defined.

Reference to "embodiment" herein means that a particular feature, structure, or characteristic described in connection with the embodiment may be included in at least one embodiment of the present application. The appearance of this phrase in various places in the specification does not necessarily refer to the same embodiment, or an independent or alternative embodiment that is exclusive of other embodiments. It is explicitly and implicitly understood by those skilled in the art that the embodiments described herein can be combined with other embodiments.

In the description of the embodiments of the present application, the term "and/or" is merely an association relationship describing associated objects, indicating that three relationships may exist. For example, A and/or B may indicate three situations: A exists alone, both A and B exist, and B exists alone. In addition, the character "/" herein generally indicates that the associated objects before and after are in an "or" relationship.

In the description of the embodiments of the present application, the term "a plurality of" refers to two or more (including two). Similarly, "a plurality of groups" refers to two or more groups (including two groups), and "a plurality of pieces" refers to two or more pieces (including two pieces).

In the description of the embodiments of the present application, the orientation or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationships shown in the drawings, which are only for convenience of describing the embodiments of the present application and simplifying the description, rather than indicating or implying that the indicated device or element must have a particular orientation, be constructed and operated in a particular orientation, and therefore cannot be understood as a limitation on the embodiments of the present application.

In the description of the embodiments of the present application, unless otherwise explicitly specified and limited, technical terms such as "mount", "connect", "connect", and "attach" should be understood in a broad sense. For example, the connection may be a fixed connection, or a detachable connection, or an integral connection; may be a mechanical connection or an electrical connection; may be a direct connection, or an indirect connection through an intermediary, or may be an internal communication between two elements or an interaction relationship between two elements. For those of ordinary skill in the art, the specific meanings of the above terms in the embodiments of the present application can be understood according to specific circumstances.

Currently, from the perspective of market development, the application of power batteries is becoming more and more extensive. Power batteries are not only applied in energy storage power systems such as hydropower, thermal power, wind power, and solar power stations, but are also widely applied in electric transportation tools such as electric bicycles, electric motorcycles, and electric vehicles, as well as a plurality of fields such as military equipment and aerospace. With the continuous expansion of the application fields of power batteries, their market demand is also continuously increasing.

The inventors of the present application have noticed that, in the related art, during the production process of power batteries, welding defects may exist at a weld seam in welding a top cover of a power battery. Welding defects may lead to direct scrapping of the battery, bringing much inconvenience to the production process. Moreover, in performing repair welding on welding defects in the related art, manual wire filling is generally adopted, that is, a welding wire is manually filled into a milling groove to perform repair welding. This not only leads to low work efficiency, but may also bring pollution from the external environment, thereby resulting in low repair welding quality.

Based on the above technical problems, the applicant has found through research that if a weld seam of a battery is inspected during the production process, and when a welding defect is detected, a portion at which the defect is located is milled and subjected to repair welding, the resulting finished battery obtained in this way can still be used normally and has certain reliability, thereby reducing a scrap rate of batteries during the production process.

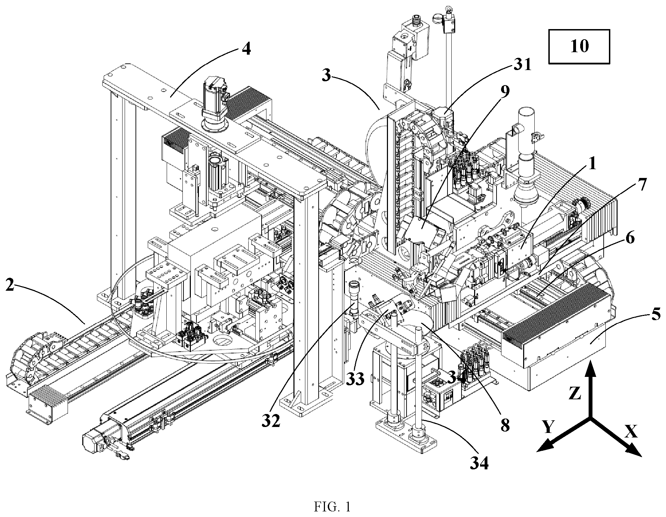

Referring to FIG. 1, the present application provides a battery repair welding system for performing repair welding on a battery housing. The battery housing includes a housing body and a top cover. The housing body includes a bottom wall and side walls arranged around the bottom wall in a circumferential direction. The bottom wall and the side walls enclose an accommodating cavity for accommodating an electrode assembly. The top cover covers the upper end of the side walls and is welded to the side walls. A weld seam located on a side surface of the battery housing is formed at a junction between the top cover and an outer wall surface of the side walls. The battery housing has milling grooves distributed on the weld seam. The battery repair welding system includes a repair welding assembly 1, a clamping assembly 2, a wire feeding assembly 3, and a controller 10. The repair welding assembly 1 is disposed beside a welding station and includes a welding head. The welding head is located beside the side surface of the battery housing (referring to the layout shown in FIG. 1, the repair welding assembly 1 and the clamping assembly 2 are spaced apart in a second direction Y. If the positional relationship of the clamping assembly 2 relative to the repair welding assembly 1 is defined such that the clamping assembly 2 is located on the left side of the repair welding assembly 1, then, referring to the layout shown in FIG. 1, the expression "the welding head is located beside the side surface of the battery housing" in the embodiments of the present application may be understood as: the welding head is located on the right side of the incoming battery), and is configured to perform repair welding on the milling groove on the battery housing of the incoming battery. The clamping assembly 2 is disposed beside the welding station and is configured to clamp the incoming battery and drive the incoming battery to move to the welding station. The wire feeding assembly 3 is disposed beside the welding station and is configured to provide a welding wire for the repair welding assembly 1 to perform welding. The controller 10 is configured to obtain a length of the milling groove, obtain a target length of a welding wire to be welded according to the length of the milling groove, and control the wire feeding assembly 3 to provide the welding wire to be welded according to the target length.

Specifically, in the battery production process, it is generally necessary to weld an electrode assembly and a top cover together. In the process of welding the electrode assembly and the top cover together, welding defects may exist at a weld seam. Therefore, it is necessary to mill the weld seam at a defect portion. A groove body formed after milling treatment is referred to as a milling groove. Performing repair welding on the milling groove can ensure integrity of the weld seam and improve reliability of the finished battery. Moreover, the length of the milling groove mentioned in the present application refers to a dimension of the milling groove in an extending direction of the weld seam.

Through the battery repair welding system, steps such as loading battery, detecting the length of the milling groove, providing a welding wire of a corresponding size, and performing repair welding are completed in an automated manner, thereby reducing manual intervention, improving repair welding efficiency, and increasing a yield rate of battery production.

In some embodiments, the battery repair welding system further includes a pressing assembly 4. The pressing assembly 4 includes a cover member 41. When the clamping assembly 2 drives the incoming battery to move to the welding station, the cover member 41 moves relative to the battery housing in a height direction Z to cover and press terminals on the top cover.

Since the thickness of the top cover is generally relatively thin, when performing welding on the milling groove from a side surface of the incoming battery, the welding head may directly act on a terminal of the top cover, thereby causing damage to the terminal. Therefore, the terminal is protected using the cover member 41, thereby improving reliability of the battery repair welding system.

In some embodiments, a shape of the cover member 41 may be substantially the same as a shape of the top cover, such that the cover member 41 covers the entire end surface of the top cover, achieving protection of the terminal. In other embodiments, the cover member is configured to cover only the terminal without covering other areas, which can also achieve protection of the terminal.

In some embodiments, in addition to playing a role in protecting the terminal, the cover member 41 is further configured to apply a vertically downward force to the top cover, so as to press the incoming battery tightly against the clamping assembly 2 and adjust a position of the incoming battery in the height direction Z, such that the weld seam corresponds in height to the welding head, thereby improving repair welding quality.

In some embodiments, the clamping assembly 2 is rotatably disposed about its own axis to drive the incoming battery to rotate, so as to perform repair welding on milling grooves on different side surfaces of the battery housing. The pressing assembly 4 is rotatably disposed about its own axis, such that after the clamping assembly 2 drives the incoming battery to rotate, the pressing assembly 4 rotates about its own axis by the same angle to cover and press the terminals.

For example, after repair welding on a milling groove on one side surface is completed, repair welding on a milling groove on an adjacent side surface needs to be performed. In this case, the clamping assembly 2 rotates by ninety degrees about its own axis, and the pressing assembly 4 also rotates by ninety degrees about its own axis, such that the cover member 41 can still protect the terminal after the incoming battery rotates. In this way, when repair welding is performed on the milling groove on each side surface of the battery housing, protection of the terminals by the cover member may be achieved, thereby improving reliability of the battery repair welding system.

In some embodiments, the battery repair welding system further includes a vision camera 9. The vision camera 9 is communicatively connected to the controller 10 and is configured to obtain an image of the weld seam of the battery housing. The controller 10 is configured to obtain the length of the milling groove according to the image of the weld seam.

Through the vision camera and machine vision technology, image information of the milling groove can be obtained relatively accurately, and the length of the milling groove can be further obtained, thereby improving accuracy and work efficiency.

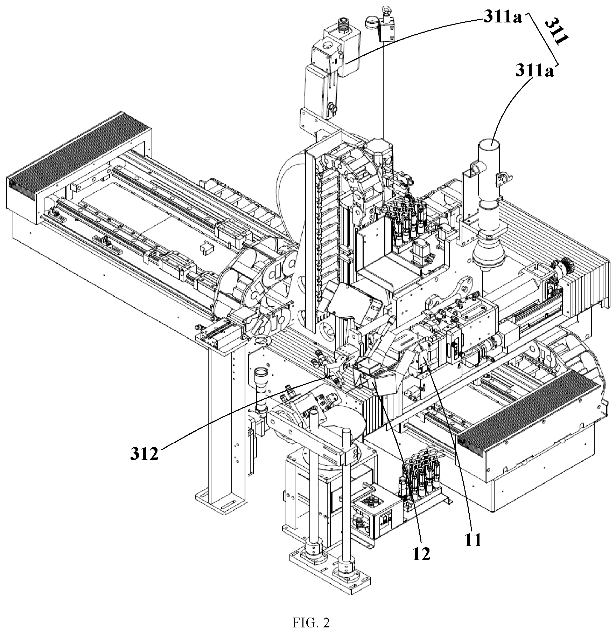

Referring to FIG. 2, in some embodiments, the welding head in the repair welding assembly 1 includes a laser emission head 11. The laser emission head 11 is configured to emit laser light for welding. The controller 10 is configured to obtain a distribution position of the milling groove on the battery housing according to the image of the weld seam, and control the laser emission head 11 and the welding wire to be welded to correspond to the position of the milling groove according to the distribution position.

Laser welding technology is adopted to improve repair welding efficiency. Moreover, after the clamping assembly 2 delivers the incoming battery to the welding station, the laser emission head 11 and the wire feeding assembly 3 are controlled to move to the position of the milling groove based on the position of the milling groove obtained by machine vision, without further adjusting the position of the incoming battery, thereby improving processing efficiency.

In some embodiments, the laser emission head 11 is located above the welding station, so as to facilitate performing repair welding on the milling groove on the upper end surface of the incoming battery.

Referring to FIG. 2, in some embodiments, the repair welding assembly 1 further has a dust hood 12. The dust hood 12 is disposed adjacent to the laser emission head 11 and is configured to absorb dust generated during the repair welding process, thereby maintaining a clean operating environment and improving repair welding quality.

Referring to FIG. 1, in some embodiments, the wire feeding assembly 3 includes a wire outlet device 31. The wire outlet device 31 is configured to provide the welding wire to be welded according to the target length, and the wire outlet device 31 is movably disposed to move toward or away from the welding station.

The wire outlet device 31 is movable in a first direction X, thereby facilitating alignment of the welding wire with the position of the milling groove and improving repair welding efficiency.

Referring to FIG. 2, in some embodiments, the wire outlet device 31 includes a wire outlet driver 311 and a wire outlet head 312. The wire outlet driver 311 is configured to provide the welding wire to be welded to the wire outlet head 312.

Specifically, the wire outlet driver 311 may include a first wire outlet driver 311a and a second wire outlet driver 311b. The first wire outlet driver 311a stores a welding wire coil, and the second wire outlet driver 311b is disposed adjacent to the first wire outlet driver 311a. The first wire outlet driver 311a can output welding wire to the second wire outlet driver 311b. Based on the welding wire provided by the first wire outlet driver 311a, the second wire outlet driver 311b precisely controls an output amount of the welding wire and delivers a certain length of welding wire to the wire outlet head 312. In this way, the length of the welding wire at the wire outlet head 312 can be controlled relatively accurately, such that the length of the welding wire matches the length of the milling groove, reducing time waste caused by replacing the welding wire due to the length of the welding wire failing to meet expectations, thereby improving repair welding efficiency.

Referring to FIG. 2, the battery repair welding system further includes a frame 5, a moving module 6, and a base 7. The frame 5 is disposed beside the welding station. The moving module 6 is disposed on the frame 5 and extends in a first direction X. The base 7 is movably disposed on the moving module 6. The repair welding assembly 1 and the wire outlet device 31 are disposed on the base 7. A position to which the clamping assembly 2 drives the incoming battery to move as shown in FIG. 1 is referred to as the welding station. When the incoming battery is subjected to repair welding, the incoming battery is located at the welding station, and the base 7 drives the repair welding assembly 1 to move, so as to correspond to the welding station. In this case, the incoming battery and the repair welding assembly 1 are aligned in the first direction X, facilitating the welding head in the repair welding assembly 1 to act on the milling groove from a position beside the side surface of the battery housing to perform repair welding.

Referring to FIG. 1, in some embodiments, the wire feeding assembly 3 further includes a detection device 32. The detection device 32 is configured to detect an actual length of the welding wire to be welded, and when a difference between the target length and the actual length is within a preset range, the controller 10 controls the wire outlet device 31 to move to the welding station for repair welding.

Specifically, the detection device 32 is disposed beside the welding station in the first direction X. After the wire outlet driver 311 provides welding wire to the wire outlet head 312, the moving module 6 drives the wire outlet driver 311 and the wire outlet head 312 to move in the first direction X to the detection device 32. The detection device 32 can accurately detect the actual length of the welding wire at the wire outlet head 312, thereby reducing a series of problems caused by an excessively large difference between the actual length of the welding wire and the target length, and improving repair welding efficiency.

Optionally, the detection device 32 includes a detection camera, and the detection camera can obtain the actual length of the welding wire.

Referring to FIG. 1, in some embodiments, the wire feeding assembly 3 further includes a cutting device 33 spaced apart from the wire outlet device 31. The controller 10 is configured to, when the detection device 32 detects that the difference between the target length and the actual length is outside the preset range, control the wire outlet device 31 to move to the cutting device 33 to cut off the welding wire to be welded, and control the wire outlet device 31 to provide a new section of welding wire. The controller 10 is further configured to control the detection device 32 to detect the newly provided welding wire. When a difference between an actual length of the newly output welding wire and the target length is within the preset range, the controller 10 controls the wire outlet device 31 to move to the welding station for repair welding.

For example, the wire outlet device 31 first outputs a first welding wire, and the detection device 33 detects an actual length of the first welding wire. If a difference between the actual length of the first welding wire and the target length is outside the preset range, the controller 10 controls the wire outlet device 31 to move to the cutting device 33 to cut off the first welding wire. Then, the wire outlet device 31 outputs a second welding wire, and the detection device 33 continues to detect an actual length of the second welding wire. If a difference between the actual length of the second welding wire and the target length is within the preset range, it indicates that the second welding wire meets the requirements and can serve as the welding wire to be welded. In this case, the controller 10 controls the wire outlet device 31 to move to the welding station for repair welding.

It can be understood that if the second welding wire still fails to meet the requirements, a third welding wire continues to be output and an actual length of the third welding wire is detected, until an output welding wire meets the requirements. The welding wire to be welded is defined as a welding wire having an actual length that meets the requirements.

In the first direction X, the cutting device 33 is disposed beside the detection device 32, and the detection device 32 is located between the welding station and the cutting device 33. When the detection device 32 detects that the length of the welding wire fails to meet the requirements, the moving module 6 continues moving to the cutting device 33, so as to cut the welding wire. The cutting device 33 cuts off the welding wire at the wire outlet head 312. Subsequently, the first wire outlet driver 311a and the second wire outlet driver 311b cooperate to provide a new section of welding wire to the wire outlet head 312 (which is also provided according to the target length). The detection device 32 detects an actual length of the newly provided section of welding wire again. If the requirements are still not met, the welding wire is cut off again and a new section of welding wire is output until the requirements are met, and then repair welding is performed. Through the above process, the automation level of the battery repair welding system is improved. Even if the output welding wire fails to meet the requirements, a new section of welding wire can be provided in a timely manner, thereby improving work efficiency.

In some embodiments, the wire feeding assembly 3 further includes a mounting rack 34. The mounting rack 34 is disposed on one side of a gantry 5 and extends in the height direction Z, and the cutting device 33 is disposed on the mounting rack 34. The battery repair welding system also includes a waste bin 8. The waste bin 8 is disposed below the cutting device 33. Through the mounting rack 34, a position of the cutting device 33 in the height direction Z can be adjusted, such that the cutting device 33 corresponds in height to the wire outlet device 31, thereby facilitating the cutting device 33 to cut the welding wire output by the wire outlet device and failing to meet the requirements. The cut-off waste wire falls into the waste bin 8, thereby achieving collection of the waste wire.

In some embodiments, the detection device 32 is further configured to detect whether an extending direction of the welding wire to be welded is consistent with a length direction of the milling groove. If the extending direction is consistent with the length direction, the controller 10 controls the wire outlet device 31 to move to the welding station for repair welding.

Specifically, in addition to detecting whether the length of the welding wire meets the requirements, whether the extending direction of the welding wire is consistent with the length direction of the milling groove is also detected (that is, whether an offset of the welding wire relative to the milling groove meets the requirements), where the welding wire to be welded is defined as a welding wire having both an actual length and an offset that meet the requirements. In this way, repair welding quality can be ensured, and reliability of a finished battery can be improved.

In some embodiments, the controller 10 is configured to, when the detection device 32 detects that the extending direction of the welding wire to be welded is inconsistent with the length direction of the milling groove, control the wire outlet device 31 to move to the cutting device 33 to cut off the welding wire to be welded, and control the wire outlet device 31 to provide a new section of welding wire. The controller 10 is further configured to control the detection device 32 to detect the newly provided welding wire, and when an extending direction of a newly output welding wire is consistent with the length direction of the milling groove, the controller 10 controls the wire outlet device 31 to move to the welding station for repair welding.

When the offset of the welding wire fails to meet the requirements, the output welding wire is cut off, a new section of welding wire is output, and the offset thereof is continuously detected until the requirements are met, and then repair welding is performed, thereby ensuring repair welding quality.

In some embodiments, the controller 10 is configured to obtain lengths of at least two milling grooves of the battery housing, obtain target lengths of at least two welding wires to be welded according to the lengths of the at least two milling grooves, sequentially provide the at least two welding wires to be welded according to the target lengths of the at least two welding wires to be welded, and sequentially perform repair welding on the at least two milling grooves using the at least two welding wires to be welded.

Specifically, a plurality of milling grooves may exist on the battery housing. While obtaining the lengths of the milling grooves, the vision camera 9 also obtains the number and positions of the milling grooves. Then, the controller 10 processes the milling grooves sequentially to perform repair welding on each of the milling grooves. This can improve processing efficiency and continuously complete repair welding operations on a plurality of milling grooves on a single battery housing.

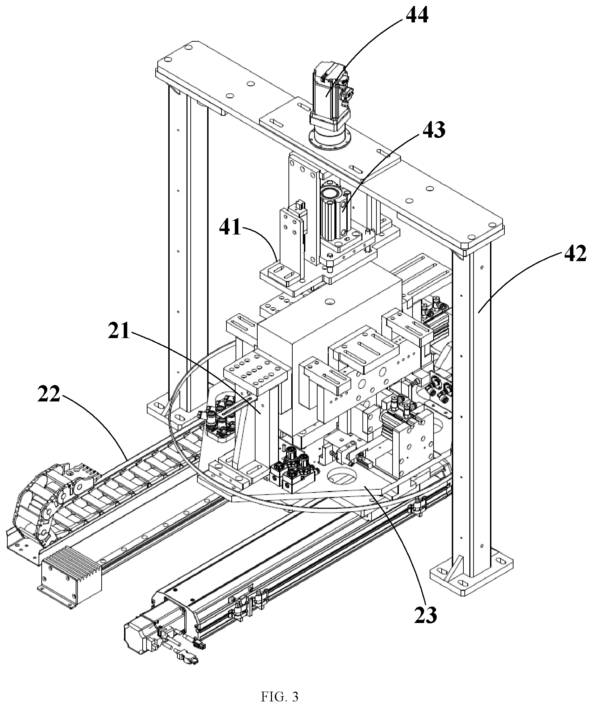

Referring to FIG. 3, in some embodiments, the clamping assembly 2 includes a clamp 21 and a moving mechanism 22. The clamp 21 is configured to clamp an incoming battery. The clamp 21 is connected to the moving mechanism 22. The moving mechanism 22 is configured to drive the clamp 21 to move, so as to move the incoming battery to the welding station.

Specifically, the battery repair welding system also has a loading station, and the loading station is arranged corresponding to the clamping assembly 2. When the incoming battery arrives at the loading station, the clamping assembly 2 picks up the incoming battery from the loading station and moves the incoming battery to the welding station for repair welding. The clamp 21 includes two clamping portions movable toward each other. When the incoming battery arrives at the loading station, the two clamping portions move toward each other to approach the housing body of the incoming battery from side surfaces of the incoming battery, and abut against the housing of the incoming battery to clamp the incoming battery. Then, the moving mechanism 22 drives the clamp 21 to move in the second direction Y, so as to move the incoming battery to the welding station. Based on this solution, the incoming battery can be clamped and transferred in a simple and efficient manner, thereby improving repair welding efficiency. Moreover, the second direction Y is perpendicular to the first direction X, thereby optimizing spatial layout of various components in the battery repair welding system, making the spatial layout relatively compact, and saving space.

Optionally, the moving mechanism 22 includes a guide rail-type structure or a slide rail-type structure.

In some embodiments, the clamping assembly 2 further includes a lifting mechanism. The lifting mechanism is disposed on the moving mechanism 22. The moving mechanism 22 is configured to drive the clamp 21 and the lifting mechanism to move. The lifting mechanism is configured to lift the incoming battery in the height direction Z.

Specifically, the clamp 21 further includes a bottom plate configured to support the incoming battery from below. When the clamping assembly 2 picks up the incoming battery from the loading station, the incoming battery is placed on the bottom plate, and then the two clamping portions fix the incoming battery. The bottom plate supports the incoming battery from the bottom of the incoming battery to improve stability. The lifting mechanism is connected to the bottom plate. After the incoming battery arrives at the welding station, the lifting mechanism operates to move the bottom plate relative to the clamping portions in the height direction Z, so as to adjust a distance between the upper end surface of the incoming battery and the laser emission head 11 in the height direction Z, thereby improving repair welding quality.

Further, the lifting mechanism includes a lifting cylinder, and an output end of the lifting cylinder is connected to the bottom plate to drive the bottom plate to move in the height direction Z. The position of the incoming battery in the height direction Z can be adjusted by the lifting cylinder. The solution is simple and has relatively low cost.

Referring to FIG. 3, in some embodiments, the clamping assembly 2 further includes a rotary platform 23. The rotary platform 23 is disposed on the moving mechanism 22, and the clamp 21 and the lifting mechanism are disposed on the rotary platform 23. The rotary platform 23 is rotatably disposed about its own axis to drive the battery to rotate, thereby facilitating repair welding on milling grooves distributed on both long sides and short sides of the battery, improving repair welding integrity and repair welding efficiency.

In some embodiments, the pressing assembly 4 further includes a gantry 42, a pressing cylinder 43, and a rotary motor 44. The gantry 42 extends across the clamping assembly 2. The pressing cylinder 43 and the rotary motor 44 are both disposed on the gantry 42. The cover member 41 is disposed at an output end of the pressing cylinder 43, and is configured to move the cover member 41 in the height direction Z to approach or move away from an end surface of the top cover of the incoming battery. The rotary motor 44 is configured to drive the cover member 41 to rotate along its own axis. The arrangement position of the gantry 42 corresponds to the welding station, such that after the incoming battery moves to the welding station, the pressing cylinder 43 only needs to drive the cover member 41 to move in the height direction Z to press and cover the top cover of the incoming battery, without adjusting the position of the cover member 41 in other directions, thereby improving efficiency.

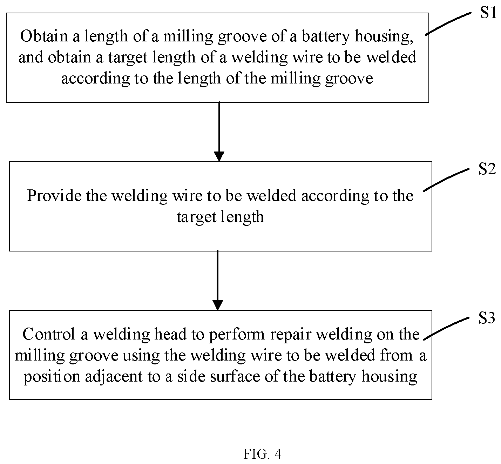

Referring to FIG. 4, the present application further provides a battery repair welding method, including the following steps:
S1: obtaining a length of a milling groove of a battery housing, and obtaining a target length of a welding wire to be welded according to the length of the milling groove;
S2: providing the welding wire to be welded according to the target length; and
S3: controlling a welding head to perform repair welding on the milling groove using the welding wire to be welded from a position beside a side surface of the battery housing.

Through this method, when a defect occurs in the weld seam of the battery, the defect portion is milled to form a milling groove, and the milling groove is subjected to repair welding. Moreover, the provided welding wire matches the size of the milling groove, thereby improving repair welding efficiency, ensuring integrity of the weld seam of a finished battery, improving reliability of the finished battery, and reducing the scrap rate of batteries.

In some embodiments, the battery repair welding method further includes: pressing and covering terminals on the top cover using a cover member during the repair welding process.

The cover member protects the terminal, preventing the laser emitted by the laser emission head 11 from damaging the terminal, thereby improving repair welding quality.

In some embodiments, the obtaining the length of the milling groove of the battery housing includes: obtaining an image of the weld seam of the battery housing; and obtaining the length of the milling groove based on the image of the weld seam.

The image of the weld seam is identified to accurately obtain the length of the milling groove, thereby improving reliability of repair welding.

In some embodiments, the battery repair welding method further includes: outputting a first welding wire and detecting an actual length of the first welding wire, and performing repair welding on the milling groove using the first welding wire when a difference between the actual length of the first welding wire and the target length is within a preset range.

By detecting the actual length of the welding wire to be welded, the possibility that the actual length fails to meet the expected length is reduced, thereby improving reliability and ensuring repair welding efficiency.

In some embodiments, the battery repair welding method further includes: cutting off the first welding wire when the difference between the actual length of the first welding wire and the target length is not within the preset range; outputting a second welding wire and detecting an actual length of the second welding wire, until a difference between an actual length of a newly output welding wire and the target length is within the preset range, and performing repair welding on the milling groove using the newly output welding wire.

In this way, the length of the welding wire corresponds to the size of the milling groove when repair welding is actually performed.

In some embodiments, the battery repair welding method further includes: outputting a first welding wire and detecting whether an extending direction of the first welding wire is consistent with a length direction of the milling groove, and performing repair welding on the milling groove using the first welding wire when the extending direction of the first welding wire is consistent with the length direction of the milling groove.

On the basis of the actual length of the welding wire meeting the requirements, it is further necessary to ensure that the extending direction of the welding wire is consistent with the length direction of the milling groove, thereby improving repair welding quality.

In some embodiments, the battery repair welding method further includes: cutting off the first welding wire when the extending direction of the first welding wire is inconsistent with the length direction of the milling groove; outputting a second welding wire and detecting an extending direction of the second welding wire, until an extending direction of a newly output welding wire is consistent with the length direction of the milling groove, and performing repair welding on the milling groove using the newly output welding wire.

In this way, during the actual repair welding process, the extending direction of the welding wire is enabled to meet the requirements, thereby improving repair welding quality.

In some embodiments, the battery repair welding method includes: obtaining lengths of at least two milling grooves of the battery housing; and obtaining target lengths of at least two welding wires to be welded according to the lengths of the at least two milling grooves.

In this way, the at least two milling grooves can be continuously subjected to repair welding, thereby improving repair welding efficiency.

In some embodiments, the battery repair welding method includes: sequentially providing at least two welding wires to be welded according to the target lengths of the at least two welding wires to be welded; and sequentially performing repair welding on the at least two milling grooves using the at least two welding wires to be welded.

In this way, when repair welding is continuously performed on a plurality of milling grooves, each provided welding wire can match a corresponding milling groove, thereby ensuring repair welding quality and efficiency.

In some embodiments, the sequentially providing at least two welding wires to be welded according to the target lengths of the at least two welding wires to be welded and sequentially performing repair welding on the at least two milling grooves using the at least two welding wires to be welded includes: obtaining distribution positions of the at least two milling grooves on the battery housing; obtaining a repair welding sequence according to the distribution positions; and adjusting an orientation of the battery according to the repair welding sequence to sequentially perform repair welding on each of the milling grooves.

During the repair welding process, the orientation of the battery is adjusted, such that the milling grooves at different positions can each correspond to the laser emission head 11, thereby ensuring that each milling groove can be subjected to repair welding, improving repair welding efficiency, and ensuring integrity of a finished battery.

In some embodiments, the at least two milling grooves include a first milling groove and a second milling groove distributed on different side surfaces of the battery housing. The battery repair welding method further includes: performing repair welding on the first milling groove and, during the repair welding process, using a cover member to press and cover terminals on the top cover; after completion of the repair welding on the first milling groove, separating the cover member from the top cover and controlling the battery housing and the cover member to rotate by the same angle; and controlling the cover member to press and cover terminals on the top cover again and performing repair welding on the second milling groove.

The cover member 41 is first controlled to separate from the top cover, and then the battery housing and the cover member 41 are rotated by the same angle (after being separated from each other, the battery housing and the cover member 41 may be rotated simultaneously or sequentially, as long as the final rotation angles thereof are the same). In this way, control is facilitated, thereby improving the control accuracy of the rotation angles of the battery housing and the cover member 41.

The above welding defects include at least one of a forming defect and a connection defect. The forming defect includes a burst point defect, a pinhole defect, a pit defect, and a shrinkage cavity defect. The connection defect includes a crack and/or an undercut, where the burst point defect is caused by a spatter (explosive arcing) problem. There are many factors that cause spattering, such as cleanliness of the housing body or the top cover, or protrusions, pores, or internal bubbles on a surface of the housing body or the top cover, which may cause the burst point defect. That is, the battery repair welding system and the battery repair welding method provided in the embodiments of the present application can perform milling for all the above welding defects to repair defective batteries.

The present application further provides a battery production line, including battery milling equipment and the battery repair welding system described above. The battery milling equipment is configured to mill welding defects of a weld seam on the battery housing to form the milling groove.

In some embodiments, the battery milling equipment includes a vision module and a milling module. The vision module obtains image information of the weld seam and identifies a position of the welding defect, and the milling module performs milling according to the position of the welding defect to form the milling groove.

An exemplary embodiment of the battery repair welding system of the present application is described in detail below with reference to FIG. 1 to FIG. 5.

The battery repair welding system includes a repair welding assembly 1, a clamping assembly 2, a wire feeding assembly 3, a pressing assembly 4, a frame 5, a moving module 6, a base 7, a waste bin 8, a controller 10, and a vision camera 9. The repair welding assembly 1 is disposed beside a welding station. The repair welding assembly 1 has a laser emission head 11 and a dust hood 12. The laser emission head 11 is configured to emit laser light for repair welding on the milling groove, and the laser emission head 11 is located beside a side surface of the battery housing. The dust hood 12 is configured to absorb dust generated during the welding process. The clamping assembly 2 includes a clamp 21, a moving mechanism 22, a rotary platform 23, and a lifting mechanism. The clamp 21 and the lifting mechanism are disposed on the rotary platform 23, and the rotary platform 23 is disposed on the moving mechanism 22. The clamp 21 is configured to clamp an incoming battery. The moving mechanism 22 is configured to drive the battery to move in the second direction Y toward the welding station. The lifting mechanism is configured to move the incoming battery in the height direction Z, such that a weld seam of the battery is positionally matched with the laser emission head 11 in the height direction Z. The rotary platform 23 can drive the battery to rotate, so as to perform repair welding on milling grooves on respective side surfaces of the battery. The wire feeding assembly 3 includes a wire outlet device 31, a detection device 32, a cutting device 33, and a mounting rack 34 that are spaced apart in the first direction X. The wire outlet device 31 includes a wire outlet driver 311 and a wire outlet head 312. The wire outlet driver 311 is configured to provide a welding wire to be welded to the wire outlet head 312. The wire outlet driver 311 includes a first wire outlet driver 311a and a second wire outlet driver 311b. The first wire outlet driver 311a stores a welding wire coil, and the second wire outlet driver 311b is disposed adjacent to the first wire outlet driver 311a. The first wire outlet driver 311a can output a welding wire to the second wire outlet driver 311b. Based on the welding wire provided by the first wire outlet driver 311a, the second wire outlet driver 311b precisely controls an output amount of the welding wire and delivers a certain length of welding wire to the wire outlet head 312. The detection device 32 is configured to detect an actual length of the welding wire to be welded, and when a difference between the target length and the actual length is within the preset range, the controller 10 controls the wire outlet device 31 to move to the welding station for repair welding. The controller 10 is configured to, when the detection device 32 detects that an extending direction of the welding wire to be welded is inconsistent with a length direction of the milling groove, control the wire outlet device 31 to move to the cutting device 33 to cut off the welding wire to be welded, and control the wire outlet device 31 to provide a new section of welding wire. The controller 10 is further configured to control the detection device 32 to detect the newly provided welding wire. When an extending direction of the newly output welding wire is consistent with the length direction of the milling groove, the controller 10 controls the wire outlet device 31 to move to the welding station for repair welding. The mounting rack 34 is disposed beside the welding station and adjacent to the detection device 32. The mounting rack 34 extends in the height direction Z, and the cutting device 33 is disposed on the mounting rack 34. The mounting rack 34 can adjust the position of the cutting device 33 in the height direction Z, such that the cutting device 33 corresponds in height to the wire outlet device 31. The waste bin 8 is disposed below the cutting device 33. The pressing assembly 4 includes a cover member 41, a gantry 42, a pressing cylinder 43, and a rotary motor 44. The shape of the cover member 41 may be substantially the same as that of the top cover, such that the cover member 41 covers an entire end surface of the top cover. The gantry 42 extends across the clamping assembly 2. The pressing cylinder 43 and the rotary motor 44 are both disposed on the gantry 42. The cover member 41 is disposed at an output end of the pressing cylinder 43 and is configured to move the cover member 41 in the height direction Z to approach or move away from the end surface of the top cover of the incoming battery. The rotary motor 44 is configured to drive the cover member 41 to rotate along its own axis. The arrangement position of the gantry 42 corresponds to the welding station, such that after the incoming battery moves to the welding station, the pressing cylinder 43 only needs to drive the cover member 41 to move in the height direction Z to press and cover the top cover of the incoming battery. The frame 5 is disposed beside the welding station. The moving module 6 is disposed on the frame 5 and extends in the first direction X. The base 7 is movably disposed on the moving module 6. The repair welding assembly 1 and the wire outlet device 31 are disposed on the base 7. During the above process, the vision camera 9 can obtain an image of the weld seam and perform analysis to obtain the position and size of the milling groove, and the controller 10 performs repair welding according to the analysis result of the vision camera 9.

Although the present application has been described with reference to preferred embodiments, various improvements can be made thereto and components therein can be replaced with equivalents without departing from the scope of the present application. In particular, as long as there is no structural conflict, various technical features mentioned in the embodiments can be combined in any manner. The present application is not limited to the specific embodiments disclosed herein, but includes all technical solutions falling within the scope of the claims.

## Claims

1. A battery repair welding method, wherein a battery housing includes a housing body and a top cover, the housing body comprises a bottom wall and side wall arranged around the bottom wall in a circumferential direction, and the bottom wall and the side walls enclose an accommodating cavity for accommodating an electrode assembly; the top cover covers an upper end of the side walls and is welded to the side walls, a weld seam located on a side surface of the battery housing is formed at a junction between the top cover and an outer wall surface of the side walls, and the battery housing has milling grooves distributed on the weld seam; the battery repair welding method comprises the following steps:
obtaining a length of the milling groove of the battery housing, and obtaining a target length of a welding wire to be welded according to the length of the milling groove;
providing the welding wire to be welded according to the target length; and
controlling a welding head to perform repair welding on the milling groove using the welding wire to be welded from a position beside a side surface of the battery housing.

2. The battery repair welding method according to claim 1, wherein the battery repair welding method further comprises: pressing and covering terminals on the top cover using a cover member during the repair welding process.

3. The battery repair welding method according to claim 1, wherein the obtaining a length of the milling groove of the battery housing comprises: obtaining an image of the weld seam of the battery housing; and obtaining the length of the milling groove based on the image of the weld seam.

4. The battery repair welding method according to any one of claims 1 to 3, wherein the battery repair welding method further comprises: outputting a first welding wire and detecting an actual length of the first welding wire; and performing repair welding on the milling groove using the first welding wire when a difference between the actual length of the first welding wire and the target length is within a preset range.

5. The battery repair welding method according to claim 4, wherein the battery repair welding method further comprises: cutting off the first welding wire when the difference between the actual length of the first welding wire and the target length is not within the preset range; outputting a second welding wire and detecting an actual length of the second welding wire, until a difference between an actual length of a newly output welding wire and the target length is within the preset range; and performing repair welding on the milling groove using the newly output welding wire.

6. The battery repair welding method according to any one of claims 1 to 5, wherein the battery repair welding method further comprises: outputting a first welding wire and detecting whether an extending direction of the first welding wire is consistent with a length direction of the milling groove; and performing repair welding on the milling groove using the first welding wire when the extending direction of the first welding wire is consistent with the length direction of the milling groove.

7. The battery repair welding method according to claim 6, wherein the battery repair welding method further comprises: cutting off the first welding wire when the extending direction of the first welding wire is inconsistent with the length direction of the milling groove; outputting a second welding wire and detecting an extending direction of the second welding wire, until an extending direction of a newly output welding wire is consistent with the length direction of the milling groove; and performing repair welding on the milling groove using the newly output welding wire.

8. The battery repair welding method according to any one of claims 1 to 7, wherein the battery repair welding method comprises: obtaining lengths of at least two milling grooves of the battery housing; and obtaining target lengths of at least two welding wires to be welded according to the lengths of the at least two milling grooves.

9. The battery repair welding method according to claim 8, wherein the battery repair welding method comprises: sequentially providing at least two welding wires to be welded according to the target lengths of the at least two welding wires to be welded; and sequentially performing repair welding on the at least two milling grooves using the at least two welding wires to be welded.

10. The battery repair welding method according to claim 9, wherein the sequentially providing at least two welding wires to be welded according to the target lengths of the at least two welding wires to be welded and sequentially performing repair welding on the at least two milling grooves using the at least two welding wires to be welded comprises: obtaining distribution positions of the at least two milling grooves on the battery housing; obtaining a repair welding sequence according to the distribution positions; and adjusting an orientation of the battery according to the repair welding sequence to sequentially perform repair welding on each of the milling grooves.

11. The battery repair welding method according to claim 8, wherein the at least two milling grooves comprise a first milling groove and a second milling groove distributed on different side surfaces of the battery housing, and the battery repair welding method further comprises: performing repair welding on the first milling groove and, during the repair welding process, using a cover member to press and cover terminals on the top cover; after completion of the repair welding on the first milling groove, separating the cover member from the top cover and controlling the battery housing and the cover member to rotate by the same angle; and controlling the cover member to press and cover terminals on the top cover again and performing repair welding on the second milling groove.

12. A battery repair welding system for performing repair welding on a battery housing, wherein the battery housing comprises a housing body and a top cover, the housing body comprises a bottom wall and side walls arranged around the bottom wall in a circumferential direction, the bottom wall and the side walls enclose an accommodating cavity for accommodating an electrode assembly; the top cover covers an upper end of the side walls and is welded to the side walls, a weld seam located on a side surface of the battery housing is formed at a junction between the top cover and an outer wall surface of the side walls, and the battery housing has milling grooves distributed on the weld seam; the battery repair welding system comprises:
a repair welding assembly (1), disposed beside a welding station and comprising a welding head, wherein the welding head is located beside the side surface of the battery housing and is configured to perform repair welding on the milling groove on the battery housing of an incoming battery;
a clamping assembly (2), disposed beside the welding station and configured to clamp the incoming battery and drive the incoming battery to move to the welding station;
a wire feeding assembly (3), disposed beside the welding station and configured to provide a welding wire for the repair welding assembly (1) to perform welding; and
a controller (10), configured to obtain a length of the milling groove, obtain a target length of a welding wire to be welded according to the length of the milling groove, and control the wire feeding assembly (3) to provide the welding wire to be welded according to the target length.

13. The battery repair welding system according to claim 12, wherein the battery repair welding system further comprises a pressing assembly (4), the pressing assembly (4) comprises a cover member, and when the clamping assembly (2) drives the incoming battery to move to the welding station, the cover member moves relative to the battery housing in a height direction (Z) to cover and press terminals on the top cover.

14. The battery repair welding system according to claim 13, wherein the clamping assembly (2) is rotatably disposed about its own axis to drive the incoming battery to rotate, so as to perform repair welding on milling grooves on different side surfaces of the battery housing, and the pressing assembly (4) is rotatably disposed about its own axis, such that after the clamping assembly (2) drives the incoming battery to rotate, the pressing assembly (4) rotates about its own axis by the same angle to cover and press the terminals.

15. The battery repair welding system according to any one of claims 12 to 14, further comprising a vision camera (9), wherein the vision camera (9) is communicatively connected to the controller (10) and is configured to obtain an image of the weld seam of the battery housing, and the controller (10) is configured to obtain the length of the milling groove according to the image of the weld seam.

16. The battery repair welding system according to claim 15, wherein the welding head (1) comprises a laser emission head (11), the laser emission head (11) is configured to emit laser light for welding, and the controller (10) is configured to obtain a distribution position of the milling groove on the battery housing according to the image of the weld seam, and control the laser emission head (11) and the welding wire to be welded to correspond to the position of the milling groove according to the distribution position.

17. The battery repair welding system according to any one of claims 12 to 16, wherein the wire feeding assembly (3) comprises a wire outlet device (31), the wire outlet device (31) is configured to provide the welding wire to be welded according to the target length, and the wire outlet device (31) is movably disposed to move toward or away from the welding station.

18. The battery repair welding system according to claim 17, wherein the wire outlet device (31) comprises a wire outlet driver (311) and a wire outlet head (312), and the wire outlet driver (311) is configured to provide the welding wire to be welded to the wire outlet head (312).

19. The battery repair welding system according to claim 17 or 18, wherein the wire feeding assembly (3) further comprises a detection device (32), the detection device (32) is configured to detect an actual length of the welding wire to be welded, and when a difference between the target length and the actual length is within a preset range, the controller (10) controls the wire outlet device (31) to move to the welding station for repair welding.

20. The battery repair welding system according to claim 19, wherein the wire feeding assembly (3) further comprises a cutting device (33) spaced apart from the wire outlet device (31), the cutting device (33) is configured to cut the welding wire provided by the wire outlet device (31), the wire outlet device (31) and the cutting device (33) are both communicatively connected to the controller (10), and the controller (10) is configured to control the wire outlet device (31) and the cutting device (33) to operate, such that a difference between the actual length of the welding wire and the target length is within a preset range.

21. The battery repair welding system according to claim 19 or 20, wherein the detection device (32) is further configured to detect whether an extending direction of the welding wire to be welded is consistent with a length direction of the milling groove.

22. The battery repair welding system according to claim 21, wherein the wire feeding assembly (3) further comprises a cutting device (33) spaced apart from the wire outlet device (31), the cutting device (33) is configured to cut the welding wire provided by the wire outlet device (31), the wire outlet device (31) and the cutting device (33) are both communicatively connected to the controller (10), and the controller (10) is configured to control the wire outlet device (31) and the cutting device (33) to operate, such that the extending direction of the welding wire is consistent with the length direction of the milling groove.

23. The battery repair welding system according to any one of claims 12 to 22, wherein the controller (10) is configured to obtain lengths of at least two milling grooves of the battery housing, obtain target lengths of at least two welding wires to be welded according to the lengths of the at least two milling grooves, sequentially provide the at least two welding wires to be welded according to the target lengths of the at least two welding wires to be welded, and sequentially perform repair welding on the at least two milling grooves using the at least two welding wires to be welded.

24. The battery repair welding system according to any one of claims 12 to 23, wherein the clamping assembly (2) comprises a clamp (21) and a moving mechanism (22), the clamp (21) is configured to clamp the incoming battery, the clamp (21) is connected to the moving mechanism (22), and the moving mechanism (22) is configured to drive the clamp (21) to move so as to move the incoming battery to the welding station.

25. The battery repair welding system according to claim 24, wherein the clamping assembly (2) further comprises a lifting mechanism, the lifting mechanism is disposed on the moving mechanism (22), the moving mechanism (22) is configured to drive the clamp (21) and the lifting mechanism to move, and the lifting mechanism is configured to lift the incoming battery in a height direction (Z).

26. A battery production line, comprising a battery milling equipment and the battery repair welding system according to any one of claims 12 to 25, wherein the battery milling equipment is configured to mill a welding defect on the weld seam of the battery housing to form the milling groove.

27. The battery production line according to claim 26, wherein the battery milling equipment comprises a vision module and a milling module, the vision module obtains image information of the weld seam and identifies a position of the welding defect, and the milling module performs milling according to the position of the welding defect to form the milling groove.
